Europäisches Patentamt

European Patent Office

Office européen des brevets

(19)

(11) Publication number: **0 156 422**
A1

# EUROPEAN PATENT APPLICATION

(12)

(21) Application number: 85200322.7

(22) Date of filing: 06.03.85

(51) Int. Cl.⁴: **C 25 B 13/04**
C 25 B 1/12

(30) Priority: 16.03.84 IT 2008384

(43) Date of publication of application:
02.10.85 Bulletin 85/40

(84) Designated Contracting States:
AT BE CH DE FR GB IT LI LU NL SE

(71) Applicant: EUROPEAN ATOMIC ENERGY COMMUNITY
(EURATOM)
Batiment Jean Monnet Plateau du Kirchberg Boîte
Postale 1907
Luxembourg(LU)

(72) Inventor: Giuffre, Luigi POLITECNICO DI MILANO
Dipt. di Chim. Ind. e Ing. Chimica Giulio Natta
P.za Leonardo da Vinci 32 I-20133 Milano(IT)

(72) Inventor: Modica, Giovanni POLITECNICO DI MILANO
Dipt. di Chim. Ind. e Ing. Chimica Giulio Natta
P.za Leonardo da Vinci 32 I-20133 Milano(IT)

(72) Inventor: Montoneri, Enzo POLITECNICO DI MILANO
Dipt. di Chim. Ind. e Ing. Chimica Giulio Natta
P.za Leonardo da Vinci 32 I-20133 Milano(IT)

(72) Inventor: Tempesti, Ezio POLITECNICO DI MILANO
Dipt. di Chim. Ind. e Ing. Chimica Giulio Natta
P.za Leonardo da Vinci 32 I-20133 Milano(IT)

(74) Representative: Giambrocono, Alfonso, Dr. Ing.
Ing. A. Giambrocono & C. S.r.l. Via Rosolino Pilo 19/B
I-20129 Milano(IT)

(54) Composite diaphragms and process for alkaline water electrolysis.

(57) Porous and alkaline permeable composite diaphragms
for electrolysis cells comprising a chemically inert, fibrous
porous matrice or substrate impregnated with a copolymer
of divinylbenzene and at least one member of the group
comprising of 2-vinylpyridine and or substituted 2-methyl-5-
vinylpyridine and/or 4-vinylpyridine; method of electrolysis
of an electrolyte using the said diaphragms and an electroly-
sis cell containing said diaphragms.

EP 0 156 422 A1

Croydon Printing Company Ltd.

0156422

# Composite diaphragms and process for alkaline water electrolysis

## State of the art

The main problems remaining in the development of a separator suitable for high temperature alkaline water electrolysis are the stability of the separator under the severe electrolysis conditions and separator wettability. Indeed significant gains in the efficiency of hydrogen production can be achieved by performing the electrolysis in concentrated alkaline solutions (up to 50 % KOH) at elevated pressures (up to 40 bar) and elevated temperatures (up to 200°C). However no commercial separator exist at this time which can withstand these extreme conditions for prolonged periods. For example, asbestos diaphragms have been shown to disintegrate at temperatures higher than 100°C. Furthermore the separator should be wettable by concentrated caustic solutions to prevent gas bubble formation at the separator which causes increased ohmic resistance and gas impurity.

Several new materials, both inorganic and organic, are currently under active investigation as eligible candidates in alkaline water electrolysers. Organic polymers could provide attractive alternatives for the replacement of the currently used asbestos, as they can be spun into fibers and these in turn can be prepared in woven cloths, felts or other non woven fabrics. Organic polymers could also be prepared as microporous films. Although modern polymers lend themselves to a variety of processes suitable for the preparation of different forms of separator materials only a very few can survive the environmental conditions existing in an alkaline water electrolyser at 150°C or above. Among these some commercially available heat-stable and chemical resistant polymers (such as polytetrafluoroethylene) have been tested for use as the required separator material. Though they are quite satisfactory in their thermal and chemical stabilities, they are found insufficiently hydrophylic to be properly wetted by the electrolyte to prevent gas bubble formation. As a matter of fact gas retention is the main drawback for these organic separators and in order to use them it is necessary to improve their wettability.

Objects of the invention

It is a primary object of the invention to provide a novel composite diaphragm material comprising a matrix of fibrous inert material impregnated with copolymer of divinylbenzene and at least one member of the group consisting of 2-vinylpyridine and or substituted 2-methyl-5-vinylpyridine and or 4-vinylpyridine which is wettable by the electrolyte and which remains dimensionally stable for long periods under the severe conditions of alkaline water electrolysis. It is another object of the invention to provide a novel process for the preparation of the composite diaphragm material.

It is a further object of the invention to provide an improved method for alkaline water electrolysis in a diaphragm cell provided with the diaphragm of the invention. It is an additional object to the invention to provide a novel electrolysis cell equipped with the novel diaphragm.

0156422

These and other objects and advantages of the invention
will become obvious from the following detailed description.

## The invention

The novel porous and alkali permeable composite diaphragms
of the invention are composed  of a chemically inert, fibrous porous matrix or substrate impregnated with a copo-
ly.mer of divinylbenzene and at least one member of the
group consisting of 2-vinylpyridine and/or substituted 2-
methyl-5-vinylpyridine and/or 4-vinylpyridine.
The copolymer is directly formed on the the inert fibrous
substrate in the presence of a high-boiling solvent.
The advantages of the composite diaphragms of this invention are their greater resistance to mechanical or chemical
abrasion. Their dimensional stability allows thinner diaphragms and smaller interelectrodic distances with a considerable saving of electric energy. Moreover because the
distance between the anodic side of the diaphragm and the
active surface may be accurately preset and is thereafter
maintained, a better faraday efficiency is obtained.

Preferably the inner fibrous material is asbestos paper or
asbestos mat, but other fibrous inert materials may be
used such as polyester fibers in the form of woven or
unwoven felt or cloth and woven or unwoven carbon fiber
felts. The ratio of divinylbenzene to the vinylpyridine
is 1:15 to 1:1, preferably between 1 to 0 and 2 to 3. The
composite diaphragm preferably contains 6 to 20 by weight
of the final diaphragm of the said copolymer, most preferably 8 to 14 by weight.

It has been unexpectedly found that by impregnating for example asbestos paper with the said copolymer obtained in situ in the presence of a high-boiling solvent, the asbestos is made absolutely stable and can withstand drastic electrolysis conditions in alkaline media even at high temperatures (up to 140°C). On the other hand, the diaphragm remains porous and permeable to alkali up to a copolymer loading of about 25% of the total weight of the composite material. Specifically it has been unexpectedly found that depending on the porportion of high-boiling solvent and of cross-linking agent which are adopted during the copolymerization step, a large gradation in properties from those of an expanded network to those of a macroporous material is obtained in the resulting copolymer.

Accordingly the hydrophilic properties of the impregnated fibrous matrix can be suitable adjusted by properly varying the experimental condition.

The novel method of the invention for the preparation of the composite diaphragm material comprises impregnating the inert fibrous matrix with a solution of 3 to 40% by volume of 2-vinylpyridine and/or substituted 2-methyl-5-vinylpyridine and/or 4-vinylpyridine and divinylbenzene in a high-boiling organic solvent such as N,N-dimethyl formamide, dimethyl sulfoxide, tetramethylene sulfone, etc. in a molar ratio of 15:1 to 1:1, preferably 8:1 to 3:2, preferably containing 0.1 to 5%, most preferably about 1% mole of a suitable polymerization initiator such as benzoylperoxide or azobisisobutyronitrile, heating the impregnated matrix at 80 - 120°C, preferably at 95 - 105°C for a time
sufficient to finish the in situ polymerisation in the
presence of high-boiling solvent and washing the composite
material with a low-boiling organic solvent to remove the
high-boiling solvent. The modification by solvent of
polymer networks obtained in situ produces significant
changes in the properties of the resulting composite diaphragm as far as network entanglement with the fibrous
matrix is concerned. Accordingly by varying the experimental
conditions an exceptionally uniform coating of the fibrous
matrix and a very strong bonding together with the fibers
due to copolymer bidging occur resulting in a composite
diaphragm which can withstand drastic electrolysis conditions even at high temperatures (140°C). Permeability,
porosity and wettability of the composite diaphragms prepared by the process of the present invention are perfectly
reproducible characteristics which can be controlled by
varying parameters such as the temperature and the time of
polymerization and most of all the relative ratios of
monomers and their concentration in the high boiling
solvent. The molar ratios of 2-vinylpyridine and/or substituted 2-methyl-5-vinylpyridine and/or 4-vinylpyridine
to divinylbenzene may range from 15:1 to 1:1 and preferably
from 8:1 to 3:2 while the solution of monomers may preferably contain from 10 to 25% of monomers and most preferably
from 15 to 20% giving to the copolymer an optimum cross-
linking degree for excellent chemical and thermal resistance
and good hydrophilic properties.

The novel electrolytic process of the invention for the
preparation of a chemical product comprises providing an electrolyte containing the elements of the product to be produced in an electrolytic cell with an anode and a cathode separated by a porous, electrolyte permeable composite diaphragm made of a chemical inert, fibrous porous matrix or substrate impregnated with a copolymer of divinylbenzene and at least one member of the group consisting of 2-vinylpyridine and/or substituted 2-methyl-5-vinylpyridine and/or 4-vinylpyridine, passing an electrolysis current through the anode, cathode and electrolyte and recovering said chemical product from cited cells. The novel electrolytic cell of the invention comprises a cell housing containing at least one anode and at least one cathode forming an interelectrodic gap with a porous, electrolyte permeable diaphragm of the invention separating the anode and cathode.

In the following examples there are described several embodiments to illustrate the invention.

However it is to be understood that the invention is not intended to be limited to the specific embodiments.

EXAMPLE 1

A roll of asbestos cardboard (0.05 cm thick and 40 cm wide) is continuously driven into a soaking bath at-10°C and having the following composition:

|  |  |  | moles |
|---|---|---|---|
| N,N dimethylformamide (DMF) | g. | 4463 | 61,13 |
| 4-vinylpyridine (VP) | " | 945 | 9 |
| divinylbenzene (DVB) | " | 260 (50%) | 1 |
| dibenzoylperoxide (DBP) | " | 36,4(75%) | 0,15 |

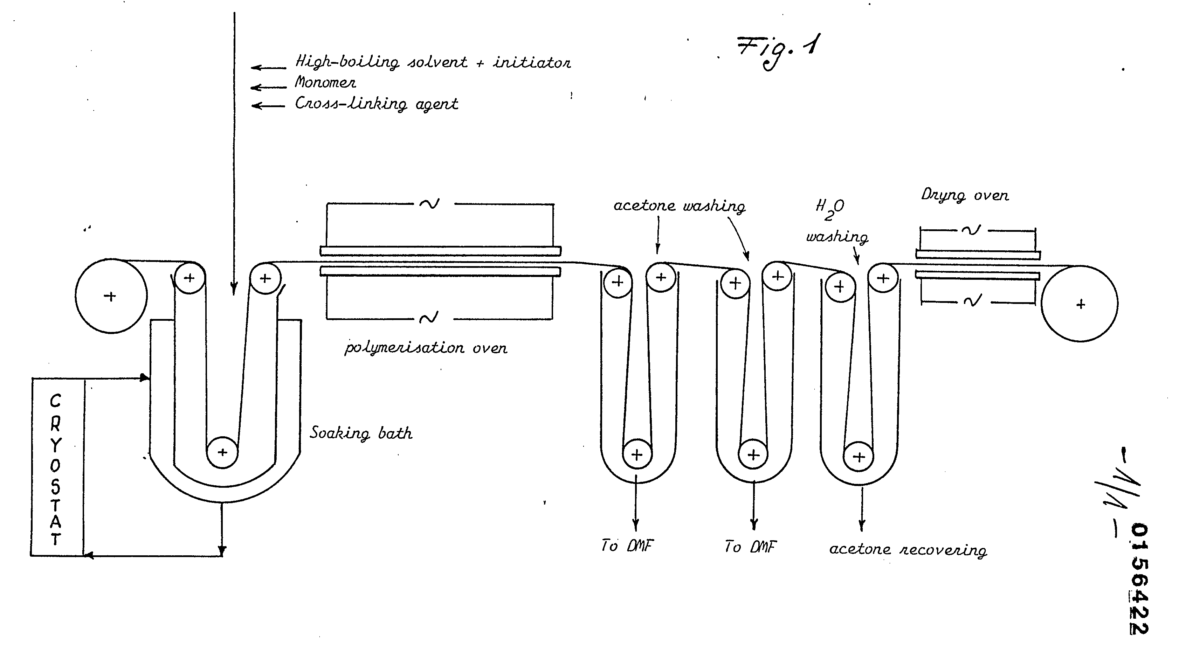

The height of liquid and the compositon of the bath are kept constant by feeding continuously fresh reagent. The cardboard residence time in the bath is 30 minutes. The cardboard coming out of the bath and impregnated with the above reagents is lend into an oven which is kept at 100 $\pm$ 3°C to carry out the monomers "in situ" polymerization in the presence of sorbed dimethylformamide. The oven is 50 cm wide and 200 cm long and consists of 2 flat sheets at 3 mm one from the other. The surfaces of the sheets which face the cardboard contain 2 terital nets. The diameter of each wire which constitutes the net is 0.3 mm. Over 1 $cm^2$ area the net contains 9 holes. The intersheets distance of 3 mm is kept by inserting teflon bars (2x3 $mm^2$) along the longest edges of the oven. The bars keep the sheets separated and the asbestos roll in the oven area. The sheets are heated externally with electric silicon rubber straps glued on the outer surfaces of the sheets. Within the oven 8 thermoresistors (Pt-100$\Omega$) keep the temperature constant. The cardboard residence time in the oven is 30 minutes. Out of the oven exit the cardboard is washed twice with acetone and water at room temperature from the solvent. The solvent (DMF) is recovered by fractional distillation from the acetone washing. From the water washing acetone is recovered in the same fashion. The roll is dried at 100°C in an oven which is similar to the former and rolled up again. Fig. 1 shows a process scheme.

Frome the cardboard weight gain,

$$\frac{(Wg - Wi)\ 100}{Wf}$$ , Wf and Wi final and initial cardboard

weight, the VP-DVB copolymer concentration of 10.5% in the cardboard is obtained. The concentration distribution throughout the cardboard varies from 10.3 to 10.7%.
A 10.5% VP-DVB asbestos sample has worked out for 2500
hours under alkaline water electrolysis. Both the cell
Ni electrodes and cardboard had a 20 cm diameter. The cell
was made of AISI 316 L steel. The operating conditions
were: $1A/cm^2$, 135°C, 43% KOH, 30 bar. The exit gases were
$H_2$ and $O_2$ each with over than 99.9 purity. The separator
ohmic drop was 0.15 $\Omega.cm^2$ at 100°C. The separator weight
loss was less than 3%.

ESAMPLE 2

Similarly as above an asbestos cardboard containing 12% of
2-methyl-5-vinylpyridine-divinylbenzene (MVP-DVB) copolymer
has been manufactured out of a soaking bath of the following
composition:

|  | grams | moles |
|---|---|---|
| dimethylsolfoxide (DMSO) | 4820 | 61 |
| 2-methyl-5-vinylpyridine (MVP) | 1180 | 10 |
| DVB (50%) | 353,6 | 1,36 |
| azobisisobutyronitrile (ABN) | 37,3 | 0,2276 |

The cardboard was tested in the electrolysis of water for
5000 hours under the following conditions:
KOH 50%, 140°C, 35 bar, 1 $A/cm^2$.
The ohmic drop across the separator was 0.2 $\Omega.cm^2$ initial-
ly and 0.16 $\Omega.cm^2$ after 5000 h. at 100°C. The other experimental conditions and results are identical to those described previously.

EXAMPLE 3

A 13% VP-DVB-asbestos roll is obtained as above from the
following soaking bath

|          | grams | moles |
|----------|-------|-------|
| DMSO     | 2422  | 31    |
| 2 VP     | 1050  | 10    |
| DVB (50%)| 260   | 1     |
| DBP (75%)| 25    | 0,11  |

at 110°C and with 20 minutes residence time.
The separator tested out at 1 A/cm$^2$, in KOH 50% at 130°C
and 30 bar in the above described cell for 3500 hours
yields the same results as above; the ohmic drop across
the separator is 0.1 $\Omega$.cm$^2$ at 100°C.


EXAMPLE 4

A separator made of carbon fiber and 23.5% 4VP-DVB has been
obtained out of the carbon fiber soaked as above and polymerized at 20°C for 1 hour. The composition of the soaking
bath is:

|          | grams | moles |
|----------|-------|-------|
| DMF      | 1353  | 18,54 |
| 4VP      | 1050  | 10    |
| DVB (50%)| 257   | 0,99  |
| DBP (75%)| 25    | 0,11  |

The purity of $H_2$ and $O_2$ from the electrolysis run as above
was >99.9. The IR drop was $\simeq$ 0.12 $\Omega$.cm$^2$ at 100°C. The
weight loss of the separator was $\simeq$ 2%.


EXAMPLE 5

A roll of asbestos cardboard (0.05 thick and 40 cm wide)
is continuously driven into a soaking bath at 0°C having
the following composition:

|  | grams | moles |
|---|---|---|
| 4VP | 19.58 | 0.186 |
| DVB | 5.11 | 0.039 |
| DBP (75%) | 0.72 | 0.002 |
| Decahydronaphtalene | 69.10 | 0.5 |

The polymerization is performed as reported in Example 1. The cardboard is washed in acetone and dried at 100°C in air. The corresponding weight gain varied between 11.5 and 12.3% while the IR drop in 30 % KOH at 100°C was 0.14-0.17 $\Omega$ .cm$^2$/

EXAMPLE 6

A roll of asbestos cardboard (0.05 thick and 40 cm wide) is continuously driven into a soaking bath at 0°C having the following composition:

|  | grams | moles |
|---|---|---|
| 4VP | 9.79 | 0.093 |
| DVB | 2.555 | 0.0195 |
| DBP (75%) | 0.036 | 0.001 |
| Xylene | 33.54 | 0.31 |

The experimental conditions are similar to those reported in Example 1 except for the temperature (80°C). The cardboard is again washed in acetone and dried at 100°C in air. The corresponding weight gain was 10.4% while the IR drop in 30% KOH at 100°C was 0.14 $\Omega$ .cm$^2$.

Various modifications of the method and processes of the present invention may be made without departing from the spirit or scope thereof. In particular, modifications as regards, for example, the type of solvent and polymerization initiator or the type of fibrous matrix, either
natural or synthetic, will be obvious to the skilled in
the art. It must be understood that the invention is not
to be limited in any way by the aforesaid examples, but
is limited only as defined in the following appended claims.

Claims:

1. A porous alkali permeable composite diaphragm comprising a chemically inert fibrous porous matrix or substrate impregnated with a copolymer of divinylbenzene and at least one member of the group consisting of 2-vinylpyridine and/or substituted 2-methyl-5-vinylpyridine and/or 4-vinylpyridine.

2. The composite diaphragm of claim 1 wherein the copolymer was directly polymerized on the substrate in the presence of a high-boiling solvent.

3. The diaphragm of claim 2 wherein the ratio of vinylpyridine to divinylbenzene is between 8 to 1 and 3 to 2.

4. The diaphragm of claim 3 wherein the weight of the copolymer was 8 to 14% by weight.

5. The composite diaphragm of claim 1 wherein the inert fibrous material is asbestos.

6. The composite diaphragm of claim 1 wherein the amount of copolymer is from 6 to 20% by weight of the composite diaphragm.

7. The composite diaphragm of claim 1 wherein the molar ratio between vinylpyridine to divinylbenzene is between 15:1 and 1:1.

8. The diaphragm of claim 1 wherein 2-methyl-5-vinylpyridine is used.

9. An electrolytic cell for alkaline water electrolysis comprising at least one anode and one cathode forming a inter-electrodic gap with a porous electrolyte permeable diaphragm of claim 1 separating the anode and cathode.

10. The cell of claim 9 wherein the inert fibrous material is asbestos.

11. The cell of claim 9 wherein the amount of copolymer is from 6 to 20% by weight of the composite diaphragm.

12. The cell of claim 9 wherein the molar ratio between vinylpyridine and divinylbenzene is between 15:1 and 1:1.

13. The cell of claim 9 wherein the copolymer was directly polymerized on the substrate in the presence of a high-boiling solvent.

14. The cell of claim 9 wherein the ratio of vinylpyridine to divinylbenzene is between 8:1 and 3:2.

15. The cell of claim 9 wherein the weight of copolymer was 8 to 14% by weight.

16. The cell of claim 9 wherein 2-methyl-5-vinylpyridine is used.

17. The cell of claim 9 wherein high temperatures (up to 140°C) are used for electrolysis.

Fig. 1

High-boiling solvent + initiator
Monomer
Cross-linking agent

polymerisation oven

acetone washing

$H_2O$ washing

Drying oven

CRYOSTAT

Soaking bath

To DMF

To DMF

acetone recovering

0156422

European Patent Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 236 979 (DE NORA)<br><br>* Column 2, lines 24-68; column 3, lines 1-63; examples; claims * | 1,3-7, 9-12, 14,15, 17 | C 25 B 13/04<br>C 25 B 1/12 |
| A | FR-A-2 303 045 (DE NORA)<br><br>* Page 3, lines 18-26; page 4, lines 13-24; claim 1 * | 1,5,6, 9-11 | |
| A | US-A-3 291 632 (NIELSEN)<br><br>* Column 2, lines 29-54; column 3, lines 22-44 * | 1,5,6, 9-11 | |
| A | EP-A-0 086 146 (ELECTRICITE DE FRANCE) | | TECHNICAL FIELDS SEARCHED (Int. Cl.4)<br><br>C 25 B 13 |
| A | EP-A-0 026 362 (SIEMENS AKTIENGESELLSCHAFT) | | |

The present search report has been drawn up for all claims

| Place of search | Date of completion of the search | Examiner |
|---|---|---|
| THE HAGUE | 07-06-1985 | COOK S.D. |